# EUROPÄISCHE PATENTSCHRIFT

(11) **EP 0 698 409 B1**
(45) Veröffentlichungstag und Bekanntmachung des Hinweises auf die Patenterteilung: **23.12.1998**
(21) Anmeldenummer: 95110122.9
(22) Anmeldetag: 29.06.1995
(51) Int. Cl.: B01D 46/24

(54) **Vorrichtung zum Abscheiden von Ölaerosol aus Luft**
Device for the separation of oil aerosols from air
Installation pour la séparation des aérosols d'huile contenus dans l'air

(30) Priorität: 23.08.1994 DE 4429822
(43) Veröffentlichungstag der Anmeldung: 28.02.1996
(73) Patentinhaber: FILTERWERK MANN & HUMMEL GMBH, 71631 Ludwigsburg (DE)
(72) Erfinder: Jokschas, Günter, D-71540 Murrhardt (DE); Keller, Lothar, D-70176 Stuttgart (DE); Wolf, Michael, D-71126 Gäufelden (DE)
(74) Vertreter: Voth, Gerhard, Dipl.-Ing.

(56) Entgegenhaltungen:
- EP-A- 0 581 178
- DE-A- 3 909 402
- DE-U- 8 501 736

## Beschreibung

Die Neuerung betrifft eine Vorrichtung zum Abscheiden von Ölaerosol aus Luft nach dem Oberbegriff des Hauptanspruchs.

Aus der DE-A-33 11 682 ist eine Lufttrockeneinrichtung für von einem Kompressor aufladbare Druckluftanlagen, insbesondere Druckluftbremsanlagen von Fahrzeugen bekannt. Diese arbeitet mit einem Trocknungsmittel, das ein begrenztes Aufnahmevermögen hat und je nach Flüssigkeitsanfall in der zu trocknenden Luft entsprechend häufig gewechselt werden muß.

Es ist weiterhin aus dem DE-U-85 01 736 ein Luftentölelement bekannt. Dieses ist nach Art eines Wechselfilters aufgebaut. Dies bedeutet, daß der Coalescer in einem Wechselelement angeordnet ist. Dieses Wechselelement kann an einen Abscheiderkopf mit einem zentralen Befestigungsgewinde befestigt werden. Ein Nachteil dieses bekannten Ölabscheiders ist darin zu sehen, daß dieser nur für einen bestimmten Luftdurchsatz ausgelegt ist. Zur Einstellung optimaler Betriebsbedingungen ist es erforderlich, den konstruktiv festgelegten Luftdurchsatz möglichst genau beizubehalten. Eine Anpassung an andere Betriebsbedingungen ist nur durch Variation der Länge des Wechselelements möglich. Dies ist jedoch nur in einem beschränkten Bereich durchführbar. Eine Durchmesseränderung ist wegen der Adaptierbarkeit des Wechselelements an den Abscheiderkopf nicht möglich.

Der Erfindung liegt daher die Aufgabe zugrunde, eine Vorrichtung zum Abscheiden von Ölaerosol aus Luft zu schaffen, die modulartig aufgebaut ist und an beliebige Betriebsbedingungen in einfacher Weise anpaßbar ist.

Diese Aufgabe wird ausgehend von dem Oberbegriff des Hauptanspruchs durch dessen kennzeichnende Merkmale gelöst.

Der wesentliche Vorteil der Erfindung ist darin zu sehen, daß das Flanschteil ein Adapterelement ist an welches weitere Flanschteile anordenbar sind. Damit besteht die Möglichkeit, eine Vielzahl von Abscheideelementen parallel anzuordnen und somit die Einrichtung zum Entölen der Luft optimal an die jeweils herrschenden Betriebsbedingungen angepaßt werden kann. Gerade beim Abscheiden von öl aus Luft ist es besonders wichtig, daß die optimalen Betriebsbedingungen eingehalten werden, d.h. die Luftdurchtrittsgeschwindigkeit durch den Ölabscheider bzw. durch das Abscheidevlies ist das entscheidende Kriterium für die Auslegung und Dimensionierung des Luftentölelements.

Ist die Durchtrittsgeschwindigkeit zu hoch, so besteht die Gefahr, daß die Luft Öl mitreißt und nicht in ausreichendem Maße entölt wird. Falls die Durchtrittsgeschwindigkeit zu niedrig ist, können die abgeschiedenen Öltröpfchen nicht ausreichend zu größeren Tropfen coalieren und abfließen. Damit wird deutlich, daß es beispielsweise nicht möglich ist, ein relativ großes Abscheideelement vorzusehen und dies für den maximalen Luftdurchsatz auszulegen, wenn auch Betriebsbedingungen auftreten, bei denen nur ein sehr geringer Luftdurchsatz herrscht.

Dieses Beispiel zeigt, daß die Erfindung nicht nur ein hohes Einsparpotential aufgrund des baukastenartigen Aufbaus zur Folge hat, sondern auch die Qualität der Luftreinigung, Luftentölung wesentlich verbessert wird. Eine Ausgestaltung der Erfindung sieht vor, den Abluftanschluß mit einem Mindestdruckventil auszustatten. Damit wird ein Rückströmen von Luft wirksam verhindert und eine Luftabgabe an das Druckluftnetz erst bei Erreichen eines Mindestdruckes ermöglicht.

Eine weitere vorteilhafte Ausgestaltung der Erfindung sieht vor, das Abscheideelement mit einem geeigneten Anschraubflansch zu versehen und über diesem Flansch zu befestigen. Alternativ dazu kann das Abscheideelement auch über eine Druckfeder und über geeignete Dichtmittel mit dem Flanschteil verbunden werden.

Gemäß einer Weiterbildung der Erfindung ist das Coalescerelement über eine Abzieheinrichtung mit dem Gehäuse verbunden. Sobald das Gehäuse entfernt wird, löst sich damit auch das Coalescerelement und kann mit dem Gehäuse abgezogen werden. Die abziehende Richtung ist beispielsweise eine Schnappverbindung oder eine Hakenverbindung, die das Coalescerelement lösbar an dem Gehäuse befestigt.

Die Erfindung wird nachfolgend anhand eines Ausführungsbeispiels näher erläutert. Es zeigt:
- Figur 1: die Parallelschaltung zweier Luftentölelemente in Eingußausführung
- Figur 2: eine weitere Variante einer Parallelschaltung in Modulbauweise
- Figur 3: eine Draufsicht auf die Variante gemäß Figur 2.

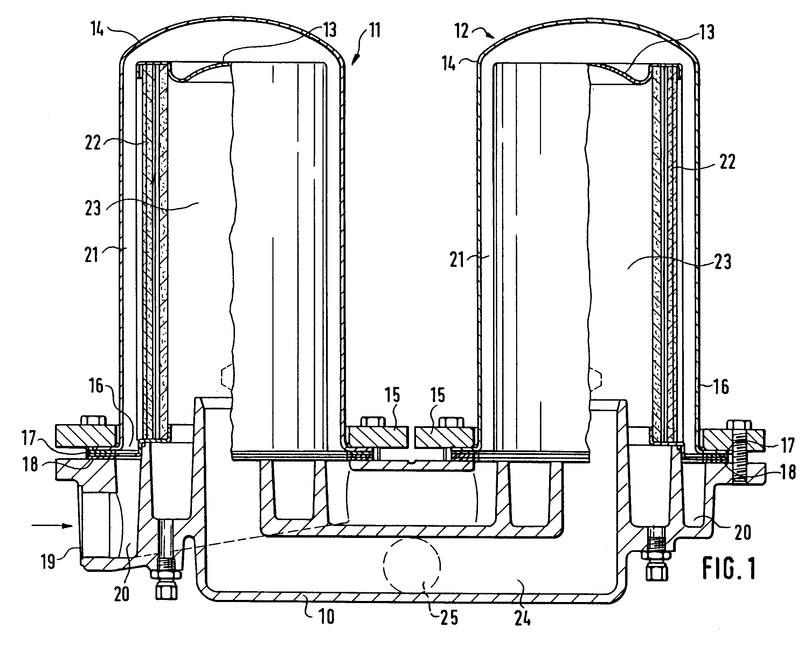

Die Figur 1 zeigt zwei Luftentölelemente 11, 12, welche an einem Flanschteil 10 befestigt sind. Die Luftentölelemente bestehen jeweils aus einem Ölabscheider 13, jeweils einem Gehäuse 14 und Flanschringen 15. Flanschring 15, Gehäuse 14 und Ölabscheider 13 bilden jeweils eine auf dem Flanschteil 10 angeordnete lösbare Einheit. Zum Austausch des Ölabscheiders 13 wird der jeweilige Flanschring 15 gelöst und das Gehäuse 14 entfernt. Da der Ölabscheider 13 ebenfalls über dem Flanschring 15 befestigt ist, sind hier nur wenige Bauteile erforderlich. Lediglich zur Abdichtung zwischen dem Gehäuse 14 und dem Flanschring 15 bzw. dem Ölabscheiderflansch 16 sind geeignete Flachdichtungen 17, 18 vorzusehen.

Die zu entölende Luft strömt über die Einströmöffnung 19 und Verteilkanäle 20 in den Außenraum 21 der beiden Ölabscheider 13. Anschließend strömt diese Luft durch das Coalescerelement 22 des jeweiligen Ölabscheiders 13 und verläßt über den Innenraum 23 den jeweiligen Ölabscheider 13. Die entölte Luft gelangt über den Abströmkanal 24 und der Abströmöffnung 25 des Flanschteils 10 zu dem hier nicht dargestellten Verbraucher.

Bei dieser in Figur 1 gezeigten Einrichtung besteht die Möglichkeit, beide Ölabscheider parallel zu betreiben. Dies wurde bereits beschrieben. Es besteht aber auch die Möglichkeit, über ein geeignetes Umschaltventil welches im Flanschteil 10 anordenbar ist, nur einen der beiden Ölabscheider oder wechselweise jeweils einen zu betreiben. Damit kann diese Einrichtung an unterschiedliche Betriebsbedingungen angepaßt werden.

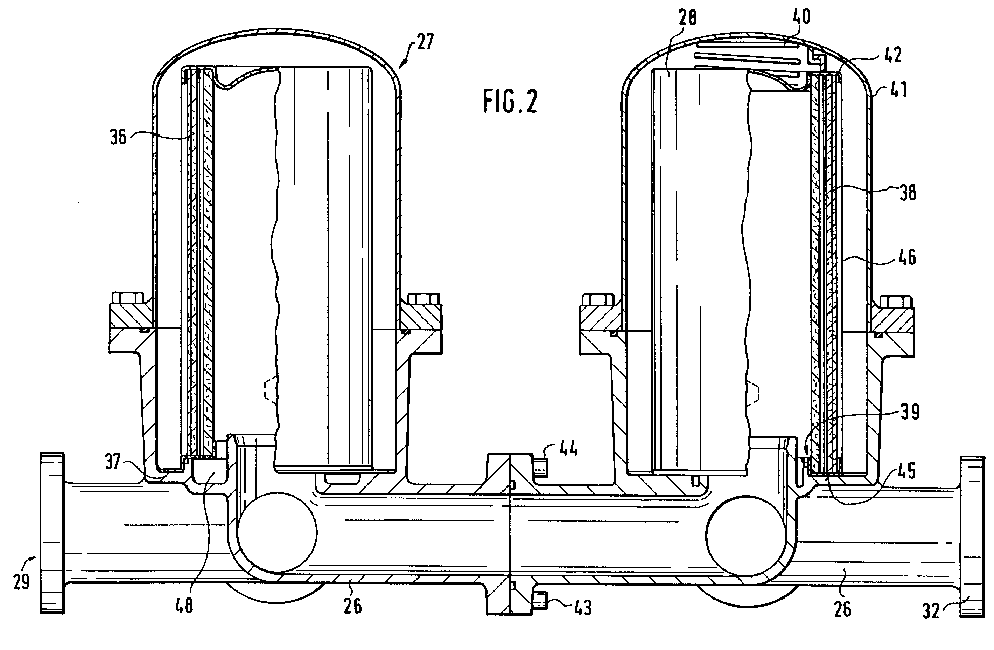

Die Variante gemäß Figur 2 zeigt eine Einrichtung, die noch eine höhere Variantenvielfalt ermöglicht. Hier kann diese Einrichtung an nahezu jede denkbare Betriebsbedingungen adaptiert werden, da das entsprechende Flanschteil 26 derart gestaltet ist, daß durch einfaches Ankoppeln mit weiteren Flanschteilen einer Parallelschaltung eine beliebig große Zahl von Luftentölelemente 27, 28 möglich ist.

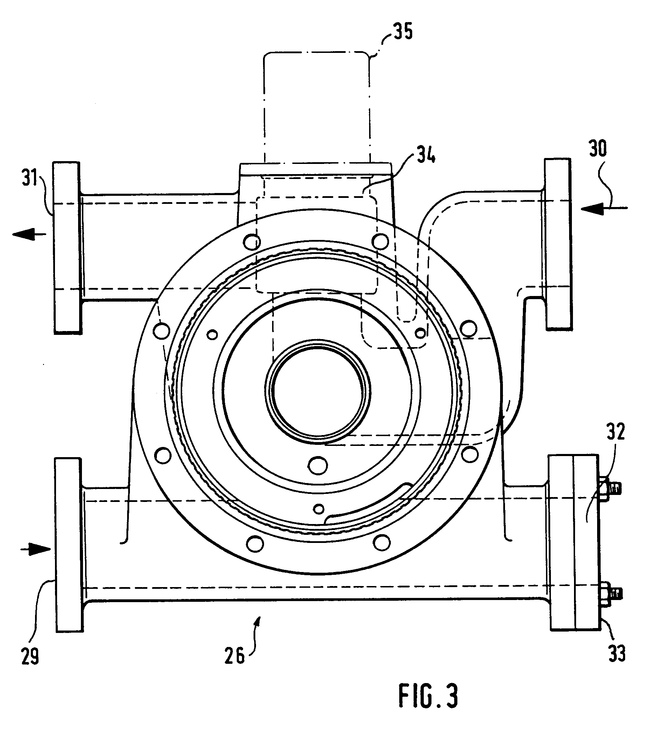

Figur 3 zeigt die Art der Verbindung der einzelnen Flanschteile 26. Jedes Flanschteil besitzt zwei Einströmöffnungen 29, 30, wobei die Einströmöffnung 29 für die zu reinigende Luft und die Einströmöffnung 30 für die bereits von einem parallel angeordneten Luftentölelement gereinigte Luft dient. Außerdem besitzt jedes Flanschteil 26 zwei Abströmöffnungen 31, 32. Die Abströmöffnung 32 dient dazu, die über die Anströmöffnung 29 zugeführte ölbeladene Luft parallel dem nächsten hier nicht gezeigten Luftentölelement zuzuführen. Die Abströmöffnung 31 dient dazu, die gereinigte Luft dem Verbraucher zuzuführen. Sofern kein weiteres parallel geschaltetes Luftentölelement mehr vorgesehen ist, wird wie an der Abströmöffnung 32 gezeigt, diese mittels eines Abschlußelements 33 verschlossen.

In der Figur 3 ist im Abströmkanal 34 noch ein Mindestdruckventil 35 zur Verhinderung des Rückströmens von entölter Luft vorgesehen.

Die in Figur 2 gezeigten Luftentölelemente 27, 28 sind unterschiedlicher Bauart. Während im Luftentölelement 27 das Coalescerelement 36 über einen Flansch 37 an dem Flanschteil 26 befestigt ist, wird das Coalescerelement 38 lediglich auf einen Radialdichtungsansatz 39 des Flanschteils 26 aufgesteckt. Durch eine Druckfeder 40, die zwischen Gehäuse 41 und Endscheibe 42 des Coalescerelements 38 gespannt ist, wird das Coalescerelement in der gezeigten Lage fixiert. Anstelle der Druckfeder 40 kann auch ein anderes beliebiges Niederhaltesystem verwendet werden. Die rechtsseitig gezeigte Variante hat den vorteil, daß bei dem Austausch des Coalescerelements 38 lediglich das Gehäuse 41 abgenommen werden muß und keine weiteren Schraubverbindungen gelöst werden. Die beiden Flanschteile 26 sind über Schraubverbindungen 43, 44 miteinander gekoppelt.

Die Ausführungen nach Figur 1 und 2 sind grundsätzlich stehend oder hängend möglich.

Das abgeschiedene Öl wird über einen Ringkanal 48 einer Permanentdrainageleitung zugeführt.

Das jeweils verwendete Coalescerelement 36, 38 ist voll recyclebar, d.h. durch geeignete Maßnahmen werden die Endscheiben 42, 45 sowie das metallische Mittelrohr 46 gelöst und evtl. wieder verwendet. Die Vlieswickel des Coalescerelements können beispielsweise thermisch entsorgt werden.

## Patentansprüche

1. Vorrichtung zum Abscheiden von Ölaerosol aus Luft bestehend aus einem Abscheideelement (11), welches als ringförmiger Coalescer (22) ausgebildet ist, der das Öl oder Ölnebel in an sich bekannter Weise zu größeren, sich durch Schwerkraft im Abscheideelement (11) und stromab davon nach unten absetzenden Öltropfen coaliert und wobei das Abscheideelement (11) in einem Gehäuse (14) angeordnet ist, das Gehäuse (14) von oben her an einem Flanschteil (10) befestigt ist, welches Anschlußleitungen für die Zuführung (19) und Abführung (25) der Luft und außerdem einen Ringkanal (48) aufweist, über den das abgeschiedene Öl einer Permanantdrainageleitung zugeführt wird, dadurch gekennzeichnet, daß das Flanschteil (10) ein Adapterelement ist, an welches weitere Flanschteile (26) anordenbar sind, so daß eine Parallelschaltung mehrerer Abscheideelemente (11, 12) möglich ist.

2. Vorrichtung nach einem der vorhergehenden Ansprüche, dadurch gekennzeichnet, daß an dem Abströmkanal (34) ein Mindestdruckventil (35) zur Verhinderung des Rückströmens von Luft vorgesehen ist.

3. Vorrichtung nach einem der vorhergehenden Ansprüche, dadurch gekennzeichnet, daß das Abscheideelement (36) über einen Anschraubflansch (37) an dem Flanschteil (26) befestigt ist.

4. Vorrichtung nach einem der vorhergehenden Ansprüche 1 - 2, dadurch gekennzeichnet, daß das Abscheideelement (38) oder das Flanschteil (39) eine Radial- oder Axialdichtung zum Abdichten zwischen dem Luft- und dem Abluftbereich aufweist und über das Gehäuse 41 gehalten ist.

5. Vorrichtung nach Anspruch 4, dadurch gekennzeichnet, daß das Gehäuse 41 und das Coalescerelement 38 mit einer Abzieheinrichtung 47 verbunden sind.

## Claims

1. Apparatus for separating oil aerosols from air, including a separating device (11), which is provided as an annular coalescer (22), which coalesces the oil or oil mist in a manner known per se to form greater oil drops which precipitate downwardly by gravitional force in the separating device (11) and downstream thereof, and wherein the separating device (11) is disposed in a housing (14), the housing (14) is secured from above on a flange member (10), which has connection ducts for the supply (19) and discharge (25) of the air and also has an annular duct (48), via which the separated oil is led to a permanent drainpipe, characterised in that the flange member (10) is a fitting element, on which additional flange members (26) are locatable, so that a parallel connection of a plurality of separating devices (11, 12) is possible.

2. Apparatus according to one of the preceding claims, characterised in that a minimum pressure valve (35) is provided at the discharge duct (34) to prevent the backflow of air.

3. Apparatus according to one of the preceding claims, characterised in that the separating device (36) is secured on the flange member (26) via a screw-on flange (37).

4. Apparatus according to one of the preceding claims 1 - 2, characterised in that the separating device (38) or the flange member (39) has a radial or axial seal for sealing between the air region and the spent air region and is retained via the housing (41).

5. Apparatus according to claim 4, characterised in that the housing (41) and the coalescer element (38) are connected to an extractor (47).

## Revendications

1. Dispositif pour séparer des aérosols d'huile et de l'air comprenant un élément séparateur (11) en forme d'organe de coalescence (22) annulaire, qui fixe par coalescence l'huile ou le brouillard d'huile d'une manière connue pour former des gouttes d'huile plus grandes, qui se déposent par gravité dans l'élément séparateur (11) et descendent dans celui-ci en aval, et
l'élément séparateur (11) est logé dans un boîtier (14) fixé par le dessus à une partie de bride (10) qui comporte des conduites de raccordement pour l'alimentation (19) et l'évacuation (25) de l'air et possède en outre un canal annulaire (48) par lequel l'huile séparée est fournie à une conduite de drainage permanente,
caractérisé en ce que
la partie de bride (10) est un élément adaptateur recevant d'autres parties de bride (26) pour permettre un montage en parallèle de plusieurs éléments séparateurs (11, 12).

2. Dispositif selon l'une quelconque des revendications précédentes,
caractérisé en ce qu'
une vanne de réduction de pression (35) est prévue sur le canal d'évacuation (34) pour interdire le retour de l'air.

3. Dispositif selon l'une quelconque des revendications précédentes,
caractérisé en ce que
l'élément séparateur (36) est fixé à la partie de bride (26) par une bride à visser (37).

4. Dispositif selon l'une quelconque des revendications 1 et 2,
caractérisé en ce que
l'élément séparateur (38) ou la partie de bride (39) comporte un joint radial ou axial réalisant l'étanchéité entre la zone de l'air et la zone d'évacuation, et qui tient le boîtier (41).

5. Dispositif selon la revendication 4,
caractérisé en ce que
le boîtier (41) et l'organe de coalescence (38) sont reliés à une installation d'extraction (47).
